# EUROPÄISCHE PATENTSCHRIFT

(11) **EP 2 948 338 B1**
(45) Veröffentlichungstag und Bekanntmachung des Hinweises auf die Patenterteilung: **11.03.2020**
(21) Anmeldenummer: 13817879.3
(22) Anmeldetag: 05.12.2013
(51) Int. Cl.: B60L 53/18, B60L 3/12

(54) **KRAFTFAHRZEUG MIT ELEKTRISCHEM ENERGIESPEICHER UND LADEKABEL SOWIE VERFAHREN ZUM BETRIEB EINES KRAFTFAHRZEUGS**
MOTOR VEHICLE HAVING AN ELECTRICAL ENERGY STORAGE DEVICE AND A CHARGING CABLE AND METHOD FOR OPERATING A MOTOR VEHICLE
VÉHICULE À MOTEUR COMPORTANT UN ACCUMULATEUR D'ÉNERGIE ÉLECTRIQUE ET UN CÂBLE DE CHARGE ET PROCÉDÉ POUR FAIRE FONCTIONNER UN VÉHICULE À MOTEUR

(30) Priorität: 23.01.2013 DE 102013001094
(43) Veröffentlichungstag der Anmeldung: 02.12.2015
(73) Patentinhaber: Audi AG, 85045 Ingolstadt (DE)
(72) Erfinder: ELIAS, Björn, 85120 Hepberg (DE); PEER, Reinhard, 85080 Gaimersheim (DE); ENTHALER, Achim, 85049 Ingolstadt (DE)
(74) Vertreter: Wohnert, Dietmar
(86) Internationale Anmeldenummer: PCT/EP2013/003677
(87) Internationale Veröffentlichungsnummer: WO 2014/114312

(56) Entgegenhaltungen:
- DE-A1-102009 050 756
- DE-A1-102010 014 417
- JP-A- 2011 160 589
- JP-A- 2013 102 640

## Beschreibung

Die Erfindung betrifft ein Kraftfahrzeug, umfassend einen über eine externe Ladevorrichtung ladbaren elektrischen Energiespeicher, insbesondere eine Batterie, und ein Ladekabel zur Verbindung des Kraftfahrzeugs mit der Ladevorrichtung. Daneben betrifft die Erfindung ein Verfahren zum Betrieb eines solchen Kraftfahrzeugs.

Im Stand der Technik sind bereits Kraftfahrzeuge bekannt, die einen Teil ihrer Antriebsenergie aus einem elektrischen Energiespeicher beziehen. Der elektrische Energiespeicher ist dabei meist als eine Hochspannungs-Batterie, die eine höhere Spannung als das übliche Bordnetz aufweist, ausgebildet. Bei Elektrokraftfahrzeugen und sogenannten Plug-In-Hybriden ist es möglich, den elektrischen Energiespeicher mittels einer Ladevorrichtung aus einer externen Energiequelle wieder aufzuladen. Um die Ladevorrichtung und einen entsprechenden Steckplatz am Kraftfahrzeug zu verbinden, ist es bekannt, ein Ladekabel vorzusehen, das dem Kraftfahrzeug selbst zugeordnet ist. Das bedeutet, das Kraftfahrzeug, beispielsweise ein Elektrokraftfahrzeug, und eben nicht die Infrastruktur wird typischerweise mit dem Ladekabel ausgeliefert. Das Ladekabel kann, je nach genauer Spezifikation der Ladeart, beispielsweise so ausgeführt sein, dass es an beiden Enden steckbar ist. Eine Seite wird also an das Kraftfahrzeug angesteckt, die andere Seite an die Ladevorrichtung (Ladeinfrastruktur). Ist dies geschehen, beginnt der Ladevorgang.

Sobald der Ladevorgang beendet ist, kann das Ladekabel an beiden Seiten wieder gelöst werden, wobei in bekannten Ausgestaltungen wenigstens der fahrzeugseitige Stecker wieder gelöst werden muss, da ansonsten der Fahrbetrieb des Kraftfahrzeugs verhindert wird, beispielsweise, indem der Antriebsstrang des Kraftfahrzeugs gesperrt wird. Ein gelöstes Ladekabel kann beispielsweise innerhalb des Kraftfahrzeugs an einer vorgesehenen Position verstaut werden.

Es ist jedoch auch denkbar, dass ein Fahrer zum Losfahren das Ladekabel nur fahrzeugseitig löst, beispielsweise aus Bequemlichkeit. Nun ist es möglich, dass das Kraftfahrzeug bewegt wird, ohne dass das Ladekabel mitgeführt wird. In einem solchen Fall bleibt das Ladekabel am Ladeplatz zurück. Passieren kann dies jedoch auch aus Versehen, wenn der Fahrer das Ladekabel liegen/hängen lässt und ohne das Ladekabel das Kraftfahrzeug wegfährt.

In solchen Fällen hat der Fahrer am Zielort kein Ladekabel mehr zur Verfügung. Er kann das Kraftfahrzeug, konkret den elektrischen Energiespeicher, mithin am Zielort nicht mehr laden. Bei einem Elektrokraftfahrzeug kann dies zu einem sogenannten "Liegenbleiber" führen.

Es sind jedoch auch Situationen denkbar, in denen der Fahrer bewusst ohne das Ladekabel losfahren möchte, beispielsweise dann, wenn er eine Rundfahrt (Abfahrtsort gleich Zielort) plant, aus Gründen der Beladung des Kraftfahrzeugs kein Stauraum für das Ladekabel verfügbar ist oder wenn er sich sicher ist, dass die zu fahrende Strecke kurz genug ist, so dass die Energie ausreichend ist, um wieder zurückzukehren. Auch ein Notfall kann dazu führen, dass ein Fahrer ohne das zeitlich aufwendige Verstauen des Ladekabels losfahren möchte.

JP 2011-160589 A betrifft ein Detektionssystem für Abnormalitäten eines Ladekabels. Dort wird von einem Stand der Technik ausgegangen, der unmittelbar vor Beginn des Ladevorgangs das Ladekabel auf Abnormalitäten, beispielsweise Kurzschlüsse oder Unterbrechungen überprüft, weshalb dort ein Ladekabel-Abnormalitäts-Detektionssystem geschaffen werden soll, welches bereits vorher eine Abnormalität im Ladekabel detektiert. Zur Lösung der dortigen Aufgabe ist vorgesehen, bei der kraftfahrzeugseitigen Ladevorrichtung auch einen Entladeanschluss vorzusehen, wobei Abnormalitäten im Ladekabel festgestellt werden können, wenn das Ladekabel in den Ladeanschluss und den Entladeanschluss eingesteckt ist.

DE 10 2009 050 756 A1 betrifft ein Verfahren zum Erkennen fehlender Gegenstände in einem Kraftfahrzeug auf der Fahrt von einem Startort zu einem Zielort, wobei die Fahrt in mehreren Fahrtabschnitten zurückgelegt wird. Während des ersten Fahrtabschnittes ein erster Inventarbestand an Gegenständen im Fahrzeug aufgenommen. Während den nachfolgenden Fahrtabschnitten erfolgt ein Vergleich des aktuellen Inventarbestands mit dem ersten Inventarbestand und in dem Fall, dass ein oder mehrere im ersten Inventarbestand umfasste Gegenstände im aktuellen Inventarbestand fehlen, wird eine Warnung ausgelöst. Es können RFID-Transponder verwendet werden und elektronische Geräte, Kinderspielzeug, Koffer und/oder Ähnliches gekennzeichnet werden.

Der Erfindung liegt daher die Aufgabe zugrunde, eine Möglichkeit anzugeben, den Fahrer beim Management des Ladekabels zu unterstützen.

Zur Lösung dieser Aufgabe ist bei einem Kraftfahrzeug der eingangs genannten Art erfindungsgemäß vorgesehen, dass das Kraftfahrzeug ferner eine Detektionsvorrichtung zur drahtlosen Ermittlung einer Anwesenheit des Ladekabels in wenigstens einem Bereich des Kraftfahrzeugs und ein mit der Detektionsvorrichtung kommunizierendes Steuergerät aufweist, welches, insbesondere bei Inbetriebnahme des Kraftfahrzeugs, zur Information eines Fahrers und zur Sperrung des Fahrbetriebs bei einem ein nicht anwesendes Ladekabel anzeigenden Ermittlungsergebnis ausgebildet ist, eine Entriegelungseinrichtung zur Freigabe des Fahrbetriebs nach einer Sperrung durch eine definierte fahrerseitigen Bedienhandlung vorgesehen ist.

Es wird mithin vorgeschlagen, zu detektieren, ob sich das Ladekabel im Innenraum des Kraftfahrzeugs, konkret wenigstens in einem Bereich des Innenraums des Kraftfahrzeugs, befindet. Hierzu ist eine Detektionsvorrichtung vorgesehen, die die Anwesenheit des Ladekabels im Innenraum des Kraftfahrzeugs (bzw. wenigstens in dem Bereich des Innenraums) detektiert und als Ermittlungsergebnis zur Verfügung stellt. Ein Steuergerät, welches beispielsweise über einen Fahrzeugbus mit der Detektionsvorrichtung verbunden ist, wertet das Ermittlungsergebnis aus und kann den Fahrer informieren und den Fahrbetrieb zumindest vorläufig sperren, falls das Ladekabel nicht im Inneren des Kraftfahrzeugs vorhanden ist. Die Detektion des Ladekabels und die daraus resultierenden Maßnahmen werden bevorzugt bei Inbetriebnahme des Kraftfahrzeugs vorgenommen, beispielsweise also dann, wenn der Fahrer gerade losfahren möchte. Es sei darauf hingewiesen, dass entsprechende Funktionalitäten im Rahmen der vorliegenden Erfindung auch durch mehr als ein Steuergerät innerhalb des Kraftfahrzeugs umgesetzt werden können.

Der Fahrer wird informiert, beispielsweise durch Ausgabe einer Warnung, was optisch und/oder haptisch und/oder akustisch erfolgen kann. Beispielsweise ist es möglich, eine Nachricht zur Information des Fahrers über ein Kombinationsdisplay und/oder an der Instrumententafel auszugeben, wobei ähnliche Vorgehensweisen wie bei einem Hinweis auf einen niedrigen Treibstoffstand oder einer Warnung, dass ein Insasse noch nicht angegurtet ist, verwendet werden können. Beispielsweise kann eine Warnleuchte, untermalt von einem akustischen Signal, aktiviert werden, wenn der Fahrer das Kraftfahrzeug in Betrieb nimmt, trotzdem das Ladekabel nicht im Innenraum des Kraftfahrzeugs vorhanden ist. Allgemein gesagt kann also das Kraftfahrzeug wenigstens eine Ausgabevorrichtung zur optischen und/oder akustischen und/oder haptischen Ausgabe einer Nachricht zur Information des Fahrers aufweisen.

Dies sorgt dafür, dass der Fahrer immer darüber informiert ist, dass das Ladekabel nicht im Kraftfahrzeug (oder zumindest in dem Bereich, vorzugsweise einem Bereich, der für die Verstauung des Ladekabels ohnehin vorgesehen ist) vorhanden ist. Auf diese Weise ist es nicht mehr möglich, dass der Fahrer aus Versehen das Ladekabel vergisst. Liegenbleiber können auf diese Art und Weise vermieden werden.

Es ist vorgesehen, dass bei einem nicht anwesenden Ladekabel im Innenraum oder wenigstens dem Bereich des Kraftfahrzeugs der Fahrbetrieb gesperrt wird, um zumindest vorerst zu vermeiden, dass der Fahrer ohne das Ladekabel losfährt. Dies übt eine weitere Informations- und Hinweisfunktion aus, welche äußerst deutlich ist. Um jedoch auch Wünschen des Fahrers gerecht zu werden, in bestimmten Situationen ohne das Ladekabel losfahren zu können, ist mit besonderem Vorteil vorgesehen, dass eine Entriegelungseinrichtung zur Freigabe des Fahrbetriebs nach einer Sperrung nach einer definierten fahrerseitigen Bedienhandlung vorgesehen ist. Das bedeutet, die Sperrung des Fahrbetriebs kann durch eine festgelegte und intuitive Bedienhandlung des Fahrers wieder gelöst werden, so dass dieser weiterhin die Möglichkeit hat, eine Fahrt ohne das Ladekabel zu beginnen. Beispielsweise kann ein spezielles Bedienelement vorgesehen sein, um die Sperre zu lösen, möglich ist es jedoch auch, eine bestimmte Abfolge von ohnehin vorhandenen Bedienelementen zu betätigen, um die Freischaltung des Kraftfahrzeugs für den Fahrbetrieb zu erreichen. Dem Fahrer ist dann in jedem Fall bewusst, dass er die nun stattfindende Fahrt ohne das Ladekabel durchführen wird.

In Weiterbildung der Erfindung kann vorgesehen sein, dass die Detektionsvorrichtung wenigstens eine Empfangsvorrichtung für Signale einer ladekabelseitigen Sendevorrichtung und die ladekabelseitige Sendevorrichtung umfasst. Im Ladekabel ist also eine Sendevorrichtung verbaut, welche ein Signal aussendet. Dieses Signal kann von einer Empfangsvorrichtung, die insbesondere im Innenraum des Kraftfahrzeugs vorgesehen ist, aufgefangen werden und dahingehend ausgewertet werden, ob sich das Ladekabel im Innenraum des Kraftfahrzeugs oder zumindest dem Bereich im Innenraum des Kraftfahrzeugs befindet. Die Sendevorrichtung und die Empfangsvorrichtung, können dabei jeweils eine Antenne und eine Steuereinheit umfassen, die bestimmt, wie Signale gesendet bzw. empfangen werden.

Dabei sei angemerkt, dass die Detektionsvorrichtung auch mehrere Empfangseinrichtungen umfassen kann, wobei aus einer Empfangssignalstärke und/oder Empfangszeit eines von der Sendeeinrichtung empfangenen Signals eine Ortsinformation des Ladekabels ermittelbar ist, bevorzugt eine Befindlichkeit des Ladekabels innerhalb und/oder außerhalb des Kraftfahrzeugs. Insbesondere im Innenraum des Kraftfahrzeugs verteilt sind in diesem Fall mehrere Empfangseinrichtungen vorgesehen, bei denen bevorzugt anhand der Empfangssignalstärke entschieden werden kann, welcher Empfangseinrichtung die Sendeeinrichtung am nächsten ist und/oder ob sich das Ladekabel im (durch die Empfangsvorrichtungen abgedeckten) Innenraum des Kraftfahrzeugs befindet.

Dabei sei an dieser Stelle angemerkt, dass die ladekabelseitige Hardware, also die Sendeeinrichtung, umfassend insbesondere die Antenne und Elektronikbauteile, sehr klein ausgeführt werden kann. Hierdurch kommt es als Einschränkung zu einer Reichweitenreduktion, welche durch mehrere Empfangsvorrichtungen und/oder vorgesehene Sollablageplätze für das Ladekabel ausgeglichen werden kann. Im letzteren Fall würde die Detektionsvorrichtung dann insbesondere nur einen oder mehrere Bereiche des Innenraums des Kraftfahrzeugs abdecken.

Es ist ferner zweckmäßig, wenn die Sendevorrichtung eine Empfangseinheit für Anfragesignale der Detektionsvorrichtung und/oder für Energie für die Sendevorrichtung umfasst. Insbesondere kann die Sendevorrichtung als ein RFID-Tag ausgebildet sein. Es ist also zum einen möglich, dass, insbesondere auch, um Energie zu sparen, die Sendeeinrichtung im Ladekabel nur dann betrieben wird, wenn ein entsprechendes Anfragesignal, beispielsweise bei Inbetriebnahme des Kraftfahrzeugs, der Detektionsvorrichtung, ausgesendet beispielsweise über eine Sendeeinheit der Empfangsvorrichtungen oder aber auch über eine dedizierte, alleinstehende Sendeeinheit, empfangen wurde. Als Antwort sendet die Sendevorrichtung des Ladekabels das Signal, welches allgemein eine Identifikationsinformation enthalten kann, die den Sender als das Ladekabel identifiziert. Zweckmäßig ist es jedoch auch, wenn die Empfangseinheit, insbesondere zusätzlich oder als Anfragesignal, Energie zum Betrieb der Sendevorrichtung empfangen kann, wie dies grundsätzlich aus der RFID-Technologie schon bekannt ist. Eine entsprechende Sendeeinheit der Detektionsvorrichtung sendet dann auf einer bestimmten Frequenz, die von der Empfangseinheit empfangen wird und in Betriebsenergie zum Senden durch die Sendevorrichtung umgewandelt wird.

Vorzugsweise ist die Sendeeinrichtung in einer wenigstens eine weitere Einrichtung zur Realisierung von Funktionen des Ladekabels, insbesondere Kommunikations- und/oder Sicherheitsfunktionen, umfassenden Baueinheit integriert. Für bestimmte Ladearten ist es bekannt, verschiedene Funktionalitäten auch innerhalb des Ladekabels zu realisieren, beispielsweise eine Kommunikation mit einer kraftfahrzeugseitigen Steuereinrichtung, die den Ladevorgang betreut, oder aber auch Sicherheitsmaßnahmen, die das Kraftfahrzeug und/oder die Ladevorrichtung schützen können. Insbesondere ist dies bei Ladearten bekannt, bei denen das Kraftfahrzeug über das Ladekabel unmittelbar an eine übliche Steckdose als Ladevorrichtung angeschlossen werden kann, wobei letztlich die von den sogenannten "wall boxes" bekannte Intelligenz dann komplett im Ladekabel realisiert werden kann. Die entsprechenden Bauteile, insbesondere Elektronikbauteile, befinden sich dann üblicherweise in einer gemeinsamen Baueinheit, die als "in-cabledevice" bezeichnet werden kann. Eine solche Baueinheit kann dann vorzugsweise auch die Sendevorrichtung aufnehmen, so dass eine äußerst kompakte, integrierte Bauweise gegeben ist.

In einer besonders vorteilhaften Ausgestaltung der vorliegenden Erfindung kann vorgesehen sein, dass das Kraftfahrzeug ferner ein Navigationssystem mit einem Zielspeicher umfasst, welches bei einem ein nicht anwesendes Ladekabel anzeigenden Ermittlungsergebnis dann, wenn beim letzten Betrieb des Kraftfahrzeugs ein ein anwesendes Ladekabel anzeigendes Ermittlungsergebnis vorlag, zum Abspeichern der aktuellen Position des Kraftfahrzeugs als einen die Position des Ladekabels anzeigenden Speichereintrag ausgebildet ist. Navigationssysteme sind in Kraftfahrzeugen im Stand der Technik bereits weitgehend bekannt und ermöglichen es, insbesondere über Anweisungen an den Fahrer diesen auf einer optimalen Route zu einem Zielort zu führen, wobei diverse Zielorte auch als Speichereinträge abgespeichert werden können. Die Idee der hier beschriebenen Ausgestaltung ist es nun, dann, wenn der Fahrer das Ladekabel außerhalb des Kraftfahrzeugs beim Losfahren zurücklässt, die Position der Inbetriebnahme des Kraftfahrzeugs abzuspeichern, so dass selbst dann, wenn das Ladekabel während einer Fahrt des Kraftfahrzeugs nicht mitgenommen wird, im Navigationssystem abgespeichert und somit bekannt ist, wo sich das Ladekabel befindet. Voraussetzung für dieser Speichervorgang ist, dass das Ladekabel beim letzten Betrieb noch anwesend war, mithin am aktuellen Ort abhanden kam, was entsprechend überprüft wird. Insbesondere kann der Speichereintrag, der die Position des Ladekabels anzeigt, dann auch genutzt werden, um komfortabel zum Ladekabel zurückgeführt werden zu können. Das Navigationssystem ist also in der Lage, den Weg zum Ladekabel anzugeben. Insbesondere kann dies in einem Fall zweckmäßig sein, in dem ein anderer Fahrer zu dem Ladekabel zurückfinden möchte.

In Weiterbildung dieses Gedankens kann das Navigationssystem zur Bezeichnung des Speichereintrags bei einem einer aktuellen Inbetriebnahme des Kraftfahrzeugs ohne weiteren Betrieb des Kraftfahrzeugs vorausgehenden Ladevorgang als die Position des Ladekabels und einer Ladevorrichtung angebender Speicherantrag ausgebildet sein, ansonsten zur Bezeichnung des Speichereintrags als nur die Position des Ladekabels anzeigender Speichereintrag. Es können also zwei unterschiedliche Fälle unterschieden werden. Wurde zwischen der Situation, dass sich das Ladekabel im Kraftfahrzeug befindet, und der Situation, dass sich das Ladekabel nicht mehr in dem Kraftfahrzeug befindet, der Energiespeicher nicht geladen, ist nicht bekannt, ob sich an der jetzigen Position des Ladekabels eine Ladevorrichtung befindet. Entsprechend kann der Speichereintrag im Navigationssystem beispielsweise als "Position des Ladekabels" bezeichnet werden. Ist aber zwischen der detektierten Anwesenheit des Ladekabels im Kraftfahrzeug und der detektierten Abwesenheit des Ladekabels in dem Kraftfahrzeug ein Ladevorgang durchgeführt worden, so ist bekannt, dass sich hier auch eine Ladevorrichtung befindet. Entsprechend kann der Speichereintrag im Navigationssystem dann beispielsweise als "Position der Ladevorrichtung mit Ladekabel" bezeichnet werden. Somit werden auch Zusatzinformationen automatisch ermittelt und zur Unterstützung des Fahrers gespeichert.

Eine weitere zweckmäßige Ausgestaltung des Erfindungsgegenstands sieht vor, dass die Detektionsvorrichtung ferner zur Ermittlung der Anwesenheit wenigstens eines weiteren entfernbar in dem Kraftfahrzeug lagerbaren Gegenstands in wenigstens einem Bereich des Kraftfahrzeugs ausgebildet ist, wobei das Steuergerät zur Information eines Fahrers und/oder zur Sperrung des Fahrbetriebs bei einem ein Fehlen des Gegenstands anzeigenden Ermittlungsergebnis ausgebildet ist. Ein solcher weiterer Gegenstand kann beispielsweise eine Warnweste und/oder ein Verbandskasten und/oder ein Warndreieck und/oder ein Führerschein sein. Es wird mithin vorgeschlagen, auch andere Gegenstände, die für eine Fahrt notwendig oder gar gesetzlich erforderlich sind, detektierbar auszugestalten, beispielsweise durch Vorsehen einer entsprechenden Sendevorrichtung. Beispiele für solche Gegenstände sind die Warnweste, der Verbandskasten und das Warndreieck. Das Kraftfahrzeug kann jedoch auch überprüfen, ob wenigstens ein Führerschein im Innenraum des Kraftfahrzeugs vorhanden ist, sofern jeder Führerschein mit einem entsprechenden Mittel, insbesondere der Sendevorrichtung, ausgestattet ist. Auf diese Weise kann die Funktionalität des hier vorgeschlagenen Systems zur Assistenz des Fahrers auch auf weitere wichtige Gegenstände im Kraftfahrzeug ausgedehnt werden.

Neben dem Kraftfahrzeug betrifft die vorliegende Erfindung auch ein Verfahren zum Betrieb eines Kraftfahrzeugs, umfassend einen über eine externe Ladevorrichtung ladbaren elektrischen Energiespeicher und ein Ladekabel zur Verbindung des Kraftfahrzeugs mit der Ladevorrichtung, welches sich dadurch auszeichnet, dass über eine Detektionsvorrichtung eine Anwesenheit des Ladekabels in wenigstens einem Bereich des Kraftfahrzeugs ermittelt wird, wobei, insbesondere bei Inbetriebnahme des Kraftfahrzeugs, eine Information eines Fahrers und eine Sperrung des Fahrbetriebs bei einem ein Fehlen des Ladekabels anzeigenden Ermittlungsergebnis erfolgt, wobei durch eine definierte fahrerseitigen Bedienhandlung eine Entriegelungseinrichtung den Fahrbetrieb nach einer Sperrung freigibt. Sämtliche Ausgestaltungen des erfindungsgemäßen Kraftfahrzeugs lassen sich analog auf das erfindungsgemäße Verfahren übertragen, mit welchem mithin dieselben Vorteile wie durch das erfindungsgemäße Kraftfahrzeug erhalten werden können.

Insbesondere ist es auch durch das erfindungsgemäße Verfahren möglich, dann, wenn ein Fehlen des Ladekabels im Innenraum des Kraftfahrzeugs detektiert wurde, einen Speichereintrag im Navigationssystem vorzunehmen, welcher die aktuelle Position des Ladekabels wiedergibt Dabei kann, wie oben beschrieben, eine Unterscheidung zwischen unterschiedlichen Fällen automatisch vorgenommen werden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: ein Ladekabel des erfindungsgemäßen Kraftfahrzeugs,
- Fig. 3: ein weiterer Gegenstand, und
- Fig. 4: eine mögliche Anzeige einer Abwesenheit des Ladekabels.

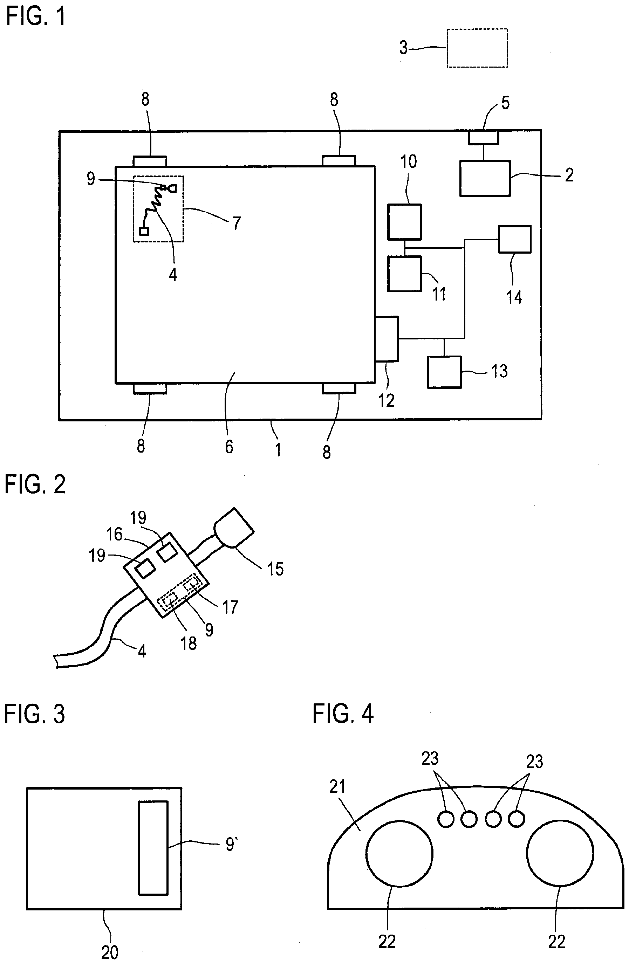

Fig. 1 zeigt eine Prinzipskizze eines erfindungsgemäßen Kraftfahrzeugs 1. Es handelt sich dabei um ein Elektrokraftfahrzeug, das bedeutet, die Antriebsenergie für das Kraftfahrzeug 1 wird von einem elektrischen Energiespeicher 2 zur Verfügung gestellt, der mit dem hier nicht näher dargestellten Motor verbunden ist. Der elektrische Energiespeicher 2, insbesondere eine Hochspannungs-Batterie, kann mittels einer hier nur angedeuteten, nicht zum Kraftfahrzeug 1 gehörigen Ladevorrichtung 3 geladen werden. Hierzu weist das Kraftfahrzeug 1 ein Ladekabel 4 auf, welches über einen entsprechenden Steckplatz 5 und einen entsprechenden ladevorrichtungsseitigen, hier nicht näher gezeigten Steckplatz eine Verbindung zwischen der Ladevorrichtung 3 und dem Kraftfahrzeug 1 herstellen kann, so dass der Energiespeicher 2 geladen werden kann.

Das Ladekabel 4 kann in einem Innenraum 6 des Kraftfahrzeugs 1, beispielsweise in einem speziell hierfür vorgesehenen Stauraum 7, gelagert werden.

Im Kraftfahrzeug 1 kann vorliegend die Anwesenheit des Ladekabels 4 in dem Innenraum 6 des Kraftfahrzeugs 1 ermittelt werden, wozu eine Detektionsvorrichtung vorgesehen ist. Diese umfasst vorliegend mehrere Empfangsvorrichtungen 8, über die Signale einer ladekabelseitigen, hier nur schematisch gezeigten Sendevorrichtung 9 des Ladekabels 4 empfangen werden können. Vorliegend sind die Empfangsvorrichtungen 8, welche jeweils wie auch die Sendevorrichtung 9, hier aus Übersichtlichkeitsgründen nicht näher dargestellt, eine Antenne und eine Steuereinheit aus Elektronik-Bauteilen aufweisen, mit einem Steuergerät 10 verbunden, das empfangene Signale auswerten kann. Vorliegend wird die Signalstärke an den verschiedenen Empfangsvorrichtungen 8 überprüft, um festzustellen, ob sich das Ladekabel 4 tatsächlich im Innenraum 6 des Kraftfahrzeugs 1 befindet. Dabei sei darauf hingewiesen, dass es in anderen Ausgestaltungen auch möglich ist, aufgrund der Signalstärken eine genauere Position des Ladekabels 4 im Kraftfahrzeug 1 abzuschätzen.

Vorliegend zeigt ein entsprechendes Ermittlungsergebnis in dem Steuergerät 10 an, ob sich das Ladekabel 4 im Innenraum 6 des Kraftfahrzeugs 1 befindet oder nicht.

Das Ermittlungsergebnis wird von dem Steuergerät 10 der Detektionsvorrichtung an ein weiteres Steuergerät 11 über einen Fahrzeugbus übertragen, wobei es im Rahmen der vorliegenden Erfindung auch denkbar ist, dass die Auswertung des Ermittlungsergebnisses in dem Steuergerät 10 selbst erfolgt.

Im vorliegenden Ausführungsbeispiel ist nun vorgesehen, dass das Ermittlungsergebnis immer dann bestimmt wird, wenn das Kraftfahrzeug 1 in Betrieb genommen werden soll. Wird dann festgestellt, dass sich das Ladekabel 4 nicht im Inneren 6 des Kraftfahrzeugs 1 befindet, erfolgen vorliegend mehrere Maßnahmen. Zum einen wird eine Ausgabevorrichtung 12 angesteuert, um eine Nachricht zur Information des Fahrers über die Abwesenheit des Ladekabels 4 auszugeben, worauf im Folgenden noch näher eingegangen werden wird. Ferner ist vorgesehen, dass der Fahrbetrieb des Kraftfahrzeugs 1 zunächst gesperrt wird. Für den Fahrer, der über die Ausgabevorrichtung 12 entsprechend informiert wurde, ist es jedoch möglich, eine definierte Bedienhandlung vorzunehmen, so dass eine Entriegelungseinrichtung 13 den Fahrbetrieb wieder freigibt und dennoch eine Fahrt ohne das Ladekabel 4 ermöglicht wird. Hierfür können geeignete dedizierte Bedienelemente vorgesehen werden, denkbar ist es jedoch auch, ohnehin vorhandene Bedienelemente, insbesondere in einer bestimmten Sequenz, zu nutzen.

Schließlich aber weist das Kraftfahrzeug 1 auch ein Navigationssystem 14 auf. Dort wird immer dann, wenn eine Fahrt ohne das Ladekabel begonnen wird, dann, wenn es bei der letzten Fahrt noch im Kraftfahrzeug 1 anwesend war, ein Speichereintrag erzeugt, der die aktuelle Position als Position des Ladekabels 4 beschreibt. Konkret wird dann, wenn zwischen einer Anwesenheit des Ladekabels 4 im Kraftfahrzeug 1 und einer Abwesenheit des Ladekabels 4 im Kraftfahrzeug 1 nicht geladen wurde, der Speichereintrag nur mit "Position des Ladekabels" bezeichnet. Ist jedoch zwischen den genannten Situationen auch geladen wurde, lautet die Bezeichnung "Position der Ladevorrichtung mit Ladekabel". Mittels des Speichereintrags im Navigationssystem 14 kann der Fahrer oder ein weiterer Fahrer stets wieder zu dem Ladekabel 4 und gegebenenfalls der Ladevorrichtung 3 zurückkehren.

Fig. 2 zeigt ein Ende des Ladekabels 4 mit einem Stecker 15 und einer Baueinheit 16 genauer. Neben der die Antenne 18 und die Steuereinheit 17 enthaltenden Sendeeinheit 9 sind in der Baueinheit 16 auch weitere Einrichtungen 19 integriert, die sonstige Funktionalitäten, hier Kommunikations- und Sicherheitsfunktionen, des Ladekabels 4 realisieren.

Die Antenne 18 gemeinsam mit der Steuereinheit 17 kann auch als Empfangseinheit für Anfragesignale der Detektionsvorrichtung sowie Energie für den Sendevorgang dienen. Bei Inbetriebnahme des Kraftfahrzeugs 1 sendet die Detektionsvorrichtung über geeignete, hier nicht näher dargestellte Sendeeinheiten, die beispielsweise in den Empfangsvorrichtungen 8 realisiert sein können, Anfragesignale einer bestimmten Frequenz aus, die von der Antenne 18 empfangen werden und zum einen als Anfragesignal, zum anderen als Energie dienen. Dann sendet die Sendevorrichtung 9 über die Antenne 18 ein Signal aus, das eine Identifikation des Ladekabels 4 als eben solches ermöglicht. Dieses Signal wird wiederum von den Empfangsvorrichtungen 8 empfangen und wie oben beschrieben durch das Steuergerät 10 zur Bestimmung des Ermittlungsergebnisses ausgewertet.

Es sei darauf hingewiesen, dass die Sendevorrichtung 9 auch als RFID-Tag realisiert werden kann.

Nachdem vorliegend die Möglichkeit gegeben ist, das Ladekabel 4 zu detektieren, wird die Detektionsvorrichtung auch genutzt, um weitere Gegenstände, die bei Betrieb des Kraftfahrzeugs 1 notwendig oder gesetzlich vorgeschrieben sind, zu detektieren. Fig. 3 zeigt eine Prinzipskizze eines solchen weiteren Gegenstands 20, der ersichtlich ebenso eine Sendeeinrichtung 9' aufweist. Bei dem Gegenstand 20 kann es sich beispielsweise um eine Warnweste, einen Verbandskasten, ein Warndreieck oder einen Führerschein handeln. Bei Fehlen des Gegenstands 20 im Innenraum 6 des Kraftfahrzeugs 1 können entsprechende Maßnahmen wie oben bezüglich des Ladekabels beschrieben ergriffen werden.

Fig. 4 zeigt eine Möglichkeit zur optischen Ausgabe einer Nachricht zur Information des Fahrers über das Fehlen des Ladekabels 4. Gezeigt ist eine Instrumententafel 21 des Kraftfahrzeugs 1, welche neben Zeigerinstrumenten 22 vorliegend auch Statusleuchten 23 aufweist, die beispielsweise einen niedrigen Energiestand, den Status von Insassenrückhaltesystemen und dergleichen anzeigen können. Auch dem Ladekabel 4 ist nun eine dieser Statusleuchten 23 zugeordnet, welche unter zusätzlicher Gabe eines akustischen Signals aufleuchtet, wenn ein Fehlen des Ladekabels 4 im Kraftfahrzeug 1 festgestellt wird.

## Patentansprüche

1. Kraftfahrzeug (1), umfassend einen über eine externe Ladevorrichtung (3) ladbaren elektrischen Energiespeicher (2) und ein Ladekabel (4) zur Verbindung des Kraftfahrzeugs (1) mit der Ladevorrichtung (3),
wobei
das Kraftfahrzeug (1) ferner eine Detektionsvorrichtung zur drahtlosen Ermittlung einer Anwesenheit des Ladekabels (4) in wenigstens einem Bereich des Kraftfahrzeugs (1) und ein mit der Detektionsvorrichtung kommunizierendes Steuergerät (10, 11) aufweist, welches, insbesondere bei Inbetriebnahme des Kraftfahrzeugs (1), zur Information eines Fahrers und zur Sperrung des Fahrbetriebs bei einem ein nicht anwesendes Ladekabel (4) anzeigenden Ermittlungsergebnis ausgebildet ist, **gekennzeichnet dadurch, dass** eine Entriegelungseinrichtung (13) zur Freigabe des Fahrbetriebs nach einer Sperrung durch eine definierte fahrerseitige Bedienhandlung vorgesehen ist.

2. Kraftfahrzeug nach Anspruch 1,
**dadurch gekennzeichnet,**
**dass** die Detektionsvorrichtung wenigstens eine Empfangsvorrichtung (8) für Signale einer ladekabelseitigen Sendevorrichtung (9) und die ladekabelseitige Sendevorrichtung (9) umfasst.

3. Kraftfahrzeug nach Anspruch 2,
**dadurch gekennzeichnet,**
**dass** die Sendevorrichtung (9) eine Empfangseinheit für Anfragesignale der Detektionsvorrichtung und/oder für Energie für die Sendevorrichtung (9) umfasst, insbesondere als ein RFID-Tag ausgebildet ist.

4. Kraftfahrzeug nach Anspruch 2 oder 3,
**dadurch gekennzeichnet,**
**dass** die Sendevorrichtung (9) in einer wenigstens eine weitere Einrichtung (19) zur Realisierung von Funktionen des Ladekabels (4), insbesondere Kommunikations- und/oder Sicherheitsfunktionen, umfassenden Baueinheit (16) integriert ist.

5. Kraftfahrzeug nach einem der vorangehenden Ansprüche,
**dadurch gekennzeichnet,**
**dass** das Kraftfahrzeug (1) wenigstens eine Ausgabevorrichtung (12) zur optischen und/oder akustischen und/oder haptischen Ausgabe einer Nachricht zur Information des Fahrers aufweist.

6. Kraftfahrzeug nach einem der vorangehenden Ansprüche,
**dadurch gekennzeichnet,**
**dass** es ferner ein Navigationssystem (14) mit einem Zielspeicher umfasst, welches bei einem ein nicht anwesendes Ladekabel (4) anzeigenden Ermittlungsergebnis dann, wenn beim letzten Betrieb des Kraftfahrzeugs (1) ein ein anwesendes Ladekabel (4) anzeigendes Ermittlungsergebnis vorlag, zum Abspeichern der aktuellen Position des Kraftfahrzeugs (1) als einen die Position des Ladekabels (4) anzeigenden Speichereintrag ausgebildet ist.

7. Kraftfahrzeug nach Anspruch 6,
**dadurch gekennzeichnet,**
**dass** das Navigationssystem (14) zur Bezeichnung des Speichereintrags bei einem einer aktuellen Inbetriebnahme des Kraftfahrzeugs (1) ohne weiteren Betrieb des Kraftfahrzeugs (1) vorausgehenden Ladevorgang als die Position des Ladekabels (4) und einer Ladevorrichtung (3) angebender Speichereintrag ausgebildet ist, ansonsten zur Bezeichnung des Speichereintrags als nur die Position des Ladekabels (4) anzeigender Speichereintrag.

8. Kraftfahrzeug nach einem der vorangehenden Ansprüche,
**dadurch gekennzeichnet**,
die Detektionsvorrichtung ferner zur Ermittlung der Anwesenheit wenigstens eines weiteren entfernbar in dem Kraftfahrzeug (1) lagerbaren Gegenstands (20) in wenigstens einem Bereich des Kraftfahrzeugs (1) ausgebildet ist, wobei das Steuergerät (10, 11) zur Information eines Fahrers und/oder zur Sperrung des Fahrbetriebs bei einem ein Fehlen des Gegenstands (20) anzeigenden Ermittlungsergebnis ausgebildet ist.

9. Kraftfahrzeug nach Anspruch 8,
**dadurch gekennzeichnet,**
**dass** der weitere Gegenstand (20) eine Warnweste und/oder ein Verbandskasten und/oder ein Warndreieck und/oder ein Führerschein ist.

10. Verfahren zum Betrieb eines Kraftfahrzeuges (1), umfassend einen über eine externe Ladevorrichtung (3) ladbaren elektrischen Energiespeicher (2) und ein Ladekabel (4) zur Verbindung des Kraftfahrzeugs (1) mit der Ladevorrichtung (3),
wobei über eine Detektionsvorrichtung eine Anwesenheit des Ladekabels (4) in wenigstens einem Bereich des Kraftfahrzeugs (1) ermittelt wird, wobei, insbesondere bei Inbetriebnahme des Kraftfahrzeugs (1), eine Information eines Fahrers und eine Sperrung des Fahrbetriebs bei einem ein Fehlen des Ladekabels (4) anzeigenden Ermittlungsergebnis erfolgt, **gekennzeichnet dadurch, dass** eine definierte fahrerseitige Bedienhandlung eine Entriegelungseinrichtung (13) den Fahrbetrieb nach einer Sperrung freigibt.

## Claims

1. Motor vehicle (1) including an electrical energy storage device (2) which can be charged via an external charging device (3) and a charging cable (4) for connecting the motor vehicle (1) with the charging device (3),
wherein the motor vehicle (1) furthermore has a detecting device for the wireless detection of a presence of the charging cable (4) in at least one area of the motor vehicle (1) and a control device (10, 11) communicating with the detecting device, which control device, in particular when the vehicle (1) is put into service, is designed to inform a driver and to block the drive operation in the case of a detection result displaying a non-present charging cable (4), **characterised in that** an unlocking device (13) is provided for releasing the drive operation after a blocking by means of a defined operating action on the part of the driver.

2. Motor vehicle according to claim 1,
**characterised in**
**that** the detecting device includes at least one receiving device (8) for signals of a transmitting device (9) on the charging cable side, and the transmitting device (9) on the charging cable side.

3. Motor vehicle according to claim 2,
**characterised in**
**that** the transmitting device (9) includes a receiving unit for request signals from the detecting device and/or for energy for the transmitting device (9), in particular is in the form of an RFID-tag.

4. Motor vehicle according to claim 2 or 3,
**characterised in**
**that** the transmitting device (9) is integrated in a unit (16) including at least one further device (19) for realising functions of the charging cable (4), in particular communication and/or safety functions.

5. Motor vehicle (1) according to any of the preceding claims,
**characterised in**
**that** the motor vehicle (1) has at least one output device (12) for the optical and/or acoustic and/or haptic output of a message for informing the driver.

6. Motor vehicle (1) according to any of the preceding claims,
**characterised in**
**that** it furthermore includes a navigational system (14) with a destination memory, which, in the case of a detection result displaying a non-present charging cable (4), when at the last operation of the motor vehicle (1) a detection result was present displaying a present charging cable (4), is configured to store the actual position of the motor vehicle (1) as a memory entry displaying the position of the charging cable (4).

7. Motor vehicle (1) according to claim 6,
**characterised in**
**that** the navigational system (14) is formed to describe the memory entry, in the case of a charging procedure preceding an actual putting into service of the motor vehicle (1) without further operation of the motor vehicle (1), as a memory entry specifying the position of the charging cable (4) and of a charging device (3), otherwise to describe the memory entry as a memory entry displaying only the position of the charging cable (4).

8. Motor vehicle (1) according to any of the preceding claims,
**characterised in**
the detecting device furthermore is configured to detect the presence of at least one further object (20), which can be stored in a removable manner in the motor vehicle (1), in at least one area of the motor vehicle (1), wherein the control device (10, 11) is configured to inform a driver and/or to block the drive operation in the case of a detection result displaying that the object (20) is missing.

9. Motor vehicle (1) according to claim 8,
**characterised in**
**that** the further object (20) is a high-visibility jacket and/or a first aid kit and/or a warning triangle and/or a driving licence.

10. Method for operating a motor vehicle (1), including an electrical energy storage device (2) which can be charged via an external charging device (3) and a charging cable (4) for connecting the motor vehicle (1) with the charging device (3),
wherein
via a detecting device a presence of the charging cable (4) in at least one area of the motor vehicle (1) is detected, wherein, in particular when the vehicle (1) is put into service, when a detection result displays that the charging cable (4) is missing, as a result the driver is informed and drive operation is blocked, **characterised in that** a defined operating action on the part of the driver an unlocking device (13) releases the drive operation after a blocking.

## Revendications

1. Véhicule automobile (1), comprenant un accumulateur d'énergie (2) électrique chargeable par le biais d'un dispositif de charge (3) externe et un câble de charge (4) pour la liaison du véhicule automobile (1) avec le dispositif de charge (3),
dans lequel le véhicule automobile (1) présente de plus un dispositif de détection pour la détermination sans fil d'une présence du câble de charge (4) dans au moins une zone du véhicule automobile (1) et un appareil de commande (10, 11) communiquant avec le dispositif de détection, qui est réalisé, en particulier pour la mise en service du véhicule automobile (1), pour l'information d'un conducteur et pour le blocage du mode de conduite en cas de résultat de détermination affichant un câble de charge non présent (4), **caractérisé en ce qu'**un dispositif de déverrouillage (13) est prévu pour la libération du mode de conduite après un blocage par une opération de commande côté conducteur définie.

2. Véhicule automobile selon la revendication 1,
**caractérisé en ce**
**que** le dispositif de détection comporte au moins un dispositif de réception (8) pour des signaux d'un dispositif d'émission (9) côté câble de charge et le dispositif d'émission (9) côté câble de charge.

3. Véhicule automobile selon la revendication 2,
**caractérisé en ce**
**que** le dispositif d'émission (9) comporte une unité de réception pour des signaux de demande du dispositif de détection et/ou pour de l'énergie pour le dispositif d'émission (9), en particulier comme une étiquette RFID.

4. Véhicule automobile selon la revendication 2 ou 3,
**caractérisé en ce**
**que** le dispositif d'émission (9) est intégré dans une unité modulaire (16) comprenant au moins un autre dispositif (19) pour la réalisation de fonctions du câble de charge (4), en particulier de fonctions de communication et/ou de sécurité.

5. Véhicule automobile selon l'une des revendications précédentes,
**caractérisé en ce**
**que** le véhicule automobile (1) présente au moins un dispositif d'émission (12) pour l'émission optique et/ou acoustique et/ou haptique d'un message pour l'information du conducteur.

6. Véhicule automobile selon l'une des revendications précédentes,
**caractérisé en ce**
**qu'**il comporte de plus un système de navigation (14) avec une mémoire cible qui est réalisé en cas de résultat de détermination affichant un câble de charge (4) non présent lorsque lors du dernier fonctionnement du véhicule automobile (1) un résultat de détermination affichant un câble de charge (4) présent était présent, pour l'enregistrement de la position actuelle du véhicule automobile (1) comme une entrée de mémoire affichant la position du câble de charge (4).

7. Véhicule automobile selon la revendication 6,
**caractérisé en ce**
**que** le système de navigation (14) est réalisé pour la désignation de l'entrée de mémoire pour un processus de charge précédant une mise en service actuelle du véhicule automobile (1) sans autre fonctionnement du véhicule automobile (1) comme entrée de mémoire indiquant la position du câble de charge (4) et d'un dispositif de charge (3), sinon pour la désignation de l'entrée de mémoire comme entrée de mémoire affichant seulement la position du câble de charge (4).

8. Véhicule automobile selon l'une des revendications précédentes,
caractérisé en ce
le dispositif de détection est de plus réalisé pour la détermination de la présence au moins d'un autre objet (20) pouvant être logé de manière amovible dans le véhicule automobile (1) dans au moins une zone du véhicule automobile (1), dans lequel l'appareil de commande (10, 11) est réalisé pour l'information d'un conducteur et/ou pour le blocage du mode de conduite en cas de résultat de détermination affichant une absence de l'objet (20).

9. Véhicule automobile selon la revendication 8,
**caractérisé en ce**
**que** l'autre objet (20) est un gilet de sécurité et/ou une trousse de premiers secours et/ou un triangle d'avertissement et/ou un permis de conduire.

10. Procédé de fonctionnement d'un véhicule automobile (1), comprenant un accumulateur d'énergie (2) électrique chargeable par le biais d'un dispositif de charge (3) externe et un câble de charge (4) pour la liaison du véhicule automobile (1) avec le dispositif de charge (3),
dans lequel une présence du câble de charge (4) est déterminée par le biais d'un dispositif de détection dans au moins une zone du véhicule automobile (1), dans lequel, en particulier lors de la mise en service du véhicule automobile (1), une information d'un conducteur et un blocage du mode de conduite sont effectués en cas de résultat de détermination affichant une absence du câble de charge (4), **caractérisé en ce qu'**une opération de commande côté conducteur définie d'un dispositif de déverrouillage (13) libère le mode de conduite après un blocage.
